# EUROPEAN PATENT SPECIFICATION

(11) **EP 2 638 130 B1**
(45) Date of publication and mention of the grant of the patent: **06.06.2018**
(21) Application number: 11785259.0
(22) Date of filing: 10.11.2011
(51) Int. Cl.: C10K 1/06, C10J 3/18, C01B 3/34, C10J 3/72

(54) **METHOD FOR FORMING A SYNGAS STREAM**
VERFAHREN ZUR HERSTELLUNG EINES SYNGAS-STROMS
PROCÉDÉ DE FORMATION D'UN FLUX DE SYNGAS

(30) Priority: 10.11.2010 US 412078 P
(43) Date of publication of application: 18.09.2013
(73) Proprietor: Air Products and Chemicals, Inc., Allentown, PA 18195-1501 (US); Alter NRG, Calgary, Alberta T2G 2W3 (CA)
(72) Inventor: KRISHNAMURTHY, Gowri, Allentown, Pennsylvania 18104 (US); KRETZ, Christine Peck, Macungie, Pennsylvania 18062 (US); HIGDON, III, Charles Roland, Allentown, Pennsylvania 18104 (US); GORODETSKY, Aleksandr, Calgary, Alberta T3G 4X8 (CA); SANTOIANNI, James, Greensburg, Pennsylvania 15601 (US)
(74) Representative: Kador & Partner
(86) International application number: PCT/US2011/060147
(87) International publication number: WO 2012/064936

(56) References cited:
- WO-A1-2004/048851
- WO-A1-2008/077233
- AU-B2- 498 077
- DE-A1- 2 212 700
- US-A- 3 890 113
- US-A- 3 976 443
- US-A- 4 081 253
- US-A- 4 110 359
- US-A- 4 141 696
- US-A1- 2008 202 028
- US-A1- 2009 151 250

## Description

### BACKGROUND OF THE INVENTION

The present invention is directed to a method for producing a syngas stream produced by the plasma gasification of waste, including municipal solid waste (MSW).

The effective management and utilization of waste is a global issue. Current waste management techniques, as suggested by regulatory agencies, such as the Environmental Protection Agency (EPA), include source reduction first, recycling and composting second, and, finally, disposal in landfills or waste combustors. Other techniques of managing waste include converting the waste to energy involving processes such as incineration and pyrolysis. There are many types of waste including municipal solid waste, commercial and industrial waste, construction and demolition waste, solid recovered fuel (SRF), refuse derived fuel (RDF), sewage sludge, electronic waste, medical waste, nuclear waste, and hazardous waste. Municipal solid waste (MSW), also called urban solid waste, trash, rubbish, or garbage, mainly comprises household/domestic waste. MSW is generally in solid/semi-solid form and includes paper and card, plastic, textiles, glass, metals, biodegradable waste (kitchen waste, yard sweepings/trimmings, wood waste), inert waste (dirt, rocks) and may include small quantities of miscellaneous materials such as batteries, light bulbs, medicines, chemicals, fertilizers, etc. Typically MSW is found to be predominantly paper/card and kitchen waste, although exact compositions can vary from one region to another depending upon the degree of recycling done by households and transfer stations and/or processing facilities.

One form of waste management includes gasification. Gasification is a process for the conversion of a carbonaceous feedstock such as coal, petroleum, biofuel, biomass, municipal solid waste (MSW), and other wastes into a combustible gas such as synthesis gas. Synthesis gas, commonly referred to as syngas is a mixture of varying amounts of carbon monoxide and hydrogen (CO + H₂) and has a variety of applications. The syngas can be used to generate power by combusting directly in a gas turbine, boiler or reciprocating engine and waste heat can be used in the generation of steam which can provide additional power through a steam turbine. Syngas can also be used for the production of hydrogen or liquid fuels or chemicals, which may be used as raw materials in the manufacture of other chemicals such as plastics. Gasification is thus a process for producing value added products and/or energy from organic materials. Typical gas compositions from the gasification of various predominantly carbon-based feedstocks in oxygen are presented in Table 1.

**Table 1: Representative Syngas Compositions from the Gasification of Various Predominantly Carbon-Based Feedstocks**

| | Natural Gas | Asphaltene | Coal | Pet Coke |
|---|---|---|---|---|
| | *vol% dry gas, O₂ fired* | *vol% dry gas, O₂ fired* | *vol% dry gas, O₂ fired* | *vol% dry gas, O₂ fired* |
| *H₂(v*/*v %)* | 63.0 | 44.7 | 38.0 | 33.0 |
| *CO (v*/*v%)* | 33.5 | 45.0 | 45.0 | 53.2 |
| *CO₂ (v*/*v%)* | 3.0 | 10.0 | 15.0 | 12.0 |
| *N₂ (vlv%)* | 0.2 | 0.3 | 2.0 | 0.6 |
| *CH₄ (v*/*v%)* | 0.3 | 500 ppm | 250 ppm | 0.2 |
| *H₂S (ppm)* | 0 | 1.3 | 0.9 | 1.5 |
| *H₂*/*CO* | 1.8 | 1.0 | 0.9 | 0.6 |

Current waste management techniques, for example as suggested by the EPA, include source reduction first, recycling and composting second, and, finally, disposal in landfills orwaste combustors. Other techniques of managing waste include converting the waste to energy using processes such as incineration or pyrolysis. Gasification varies from these processes in that it involves controlled oxygen levels and temperatures in the gasifier, thereby leading to a gas stream richer in syngas.

A particular form of gasification includes plasma gasification. Plasma gasification is a waste treatment technology that uses electrical energy and the high temperatures created by a plasma arc to break down waste into a gaseous product which contains syngas and molten, glass-like by-product (slag) in a vessel called the plasma gasification reactor. Plasma is a high temperature luminous gas that is partially ionized and is made up of gas ions, atoms and electrons. Slag is produced from the vitrification of inorganic mineral matter such as glass and metals which are often contained in waste. Depending on the composition of the MSW and the gasification process, the volatiles typically comprise CO, H₂, H₂O CO₂, N₂, O₂, CH₄, H₂S, COS, NH₃, HCl, Ar, Hg, HCN, HF, saturated and unsaturated hydrocarbons (tars) and char (ash).

Whether the purpose of producing syngas is to generate electricity or to produce chemicals, the various impurities present in the raw gas from the gasifier need to be removed prior to usage. The extent of their removal and that of the other components is highly dependent upon the next steps b create a useful product, with very specific requirements needed to maximize the generation of power.

One known process for gasification of municipal solid waste (MSW) as well as other biomass such as wood is disclosed by Faaij et. al. in Biomass and Bioenergy, 12(6), 387-407 (1997), hereinafter "the Faaij reference". The compositions disclosed in the Faaij reference represent air-fired gasification of MSW and other biomass. However, the crude syngas of Faaij contains 13.98 v/v% CO in wet syngas (16 v/v% CO in dry gas), which is undesirably low compared to desired syngas composition from waste gasification systems. The Faaij reference includes processes that are limited only to air-fired gasification. In addition, the Faaij reference utilizes a specific type of circulating fluidized bed (ACFB type) gasifier from TPS Technology. In addition, the Faaij reference does not disclose COS or HCl as part of the syngas. The NH₃ concentration in the Faaij reference is disclosed as 1.00 v/v% (wet basis), corresponding to 11,700 ppm NH₃. In addition to the other drawbacks above, the concentration of NH₃ in Faaij is undesirably high for known waste gasification and cleanup systems.

Another known syngas production method is disclosed by M. Morris et al. of TPS Termiska Processer AB, NykoÈping, Sweden in Waste Management. 1998,18 (6-8), 557-564, hereinafter "the TPS Termiska reference" where the composition of syngas produced from MSW and biomass has been provided. As in the case of the Faaij reference, the CO concentration is undesirably low for conventional waste gasification and cleanup systems. The composition of CO in the syngas stream disclosed in the TPS Termiska reference is 8.8 v/v% in wet gas (9.74 v/v% in dry gas) and 48 ppm of H₂S. The TPS Termiska reference does not disclose COS, HCl, NH₃ or HCN. As in the case of the Faaij reference, the TPS Termiska reference does not disclose a plasma gasifier, but is limited to a circulating fluidized bed gasifier. In addition, the TPS Termiska reference is limited to air-fired gasification. In addition to the above drawbacks, the TPS Termiska reference requires pre-sorting and processing of MSW prior to gasification, increasing cost and energy requirements.

Another known gasification process is disclosed by Jae Ik Na et. al. in Applied Energy, 2003, 75, 275-285, hereinafter "the Jae Ik Na reference". The Jae Ik Na reference discloses gasification of MSW in a fixed bed gasifier. Fig 9 and 10 in the Jae Ik Na reference disclose a CO₂ composition of 20-60% and 5-20% CH₄, in the syngas, which is undesirably high, thereby leading to higher costs due to special processes associated with removal of these species. The Jae Ik Na reference does not disclose N₂, H₂S, COS, HCl, NH₃, HCN or hydrocarbons other than CH₄. In addition, the Jae Ik Na reference does not disclose a particulate loading. In addition, the fixed bed gasifier of the Jae Ik Na reference involves drying, pyrolysis, gasification and combustion zones within the gasifier, wherein, each zone requires different temperatures, providing for complicated processing and additional control and/or energy consumption.

A known plasma gasification process is disclosed by a publication M. Minutillo et. al. of University of Cassino, Italy in Energy Conversion and Management 50 (2009) 2837-2842, hereinafter "the University of Cassino reference". The University of Cassino reference discloses information on syngas produced by plasma gasification of refuse derived fuel (RDF). The amount of CO, therefore reducing the H₂/CO ratio, disclosed in the University of Cassino reference is undesirably high for conventional waste gasification and cleanup systems. Additionally, the University of Cassino reference does not indicate a syngas composition from MSW. Instead their research involves use of refuse derived fuel (RDF) which is created from MSW by sorting and processing to eliminate as much noncombustible material as possible, thereby significantly increasing the cost and energy associated with the process.

Another plasma gasification process is described in a publication by Vaidyanathan et.al. in Journal of Environmental Management 82 (2007)77-82, hereinafter "the Vaidyanathan reference". The Vaidyanathan reference discloses plasma gasification of industrial waste and solid waste from the U.S. army. The Vaidyanathan reference does not disclose hydrocarbons, HCl, NH₃, HCN, H₂S and COS concentrations or particulate loads. In the Vaidyanathan reference, a surrogate solid waste stream is formed to mimic the U.S. army waste stream in their laboratory gasification experiments. The composition of the solid waste stream reported in the Vaidyanathan reference is very different than typical MSW compositions. For example, the paper and card content is about 55 wt% which is much higher than the typical range of 10-35 wt%. Plastic content of the U.S. Army waste is at 25 wt% which is also significantly higher than the typical range of 5-15 wt% in typical MSW.

US Patent No. 6,987,792 discloses a syngas composition with at least 40-45% H2 and at least 40-45% CO, but fails to disclose any other components. US 2008/0202028 A1 discloses a method for forming a syngas stream from waste using plasma gasification.

In addition to the chemical makeup of the syngas, the quality of the syngas stream is addressed in terms of particulate loading and distribution of particulate sizes. More specifically, the two particulate properties for measuring the quality of a syngas stream include the particulate loading and the percent particulate below 1 micron. As one skilled in the art of particulate removal would appreciate, particulates below 1 micron become increasingly difficult to remove. As such, concentrations and/or amounts of particulate below 1 micron provide a measure of the ease or difficulty in which the process stream can be treated.

Examples of particulate loading and sizes are disclosed by the EPA's Emission Standards and Engineering group, who released a two volume report entitled "Control Techniques for Particulate Emissions from Stationary Sources", hereinafter, the EPA Report. The EPA report provides examples of particulate and size distributions for various industrial applications. Two illustrative applications will be drawn forth for discussion from the incineration of MSW. The first instructive example utilizes the particulate loading and particle size distribution data provided for a typical large scale, stoker like, MSW furnace burning roughly 38,200 kg/hr of solid waste. The furnaces referenced are typical of those built in Europe in the 1940's with five or six in operation in the US in 1982, the year the report was issued. The results show uncontrolled particulate matter (PM) emissions, the particulates present in the stream prior to particulate clean up, having a loading of 2,360 mg/Nm³ and a particle size distribution of less than 20 wt% being smaller than 1 micron in size. Conversely, a second example for a smaller modular system with a staged combustion approach to incineration of MSW yielded particulate loading much higher in small particulates, with greater than 90 wt% of the PM emissions being below 1 micron, with similar loadings of 180-3,340 mg/Nm³. The EPA reports also details particulate loading and particle size distribution for blast furnace offgas. The gas is produced in the making of pig iron and produces a top gas rich in particulate, 27,500 mg/Nm³, in which less than 10 wt% of the particulate is less than 74 microns. Syngas and offgas compositions having high particle loadings and high concentrations of fine particulates below about 1 micron are generally not known in the art.

### BRIEF SUMMARY OF THE INVENTION

The present disclosure is a method for generating a syngas composition of the invention via the plasma gasification of waste. Without wishing to be bound by any theory or explanation, it is believed that the composition of the inventive syngas can vary depending upon the composition of the waste employed, the amount of oxygen present during gasification, and the temperature within the gasifier. In general, the higher operating temperature of the plasma gasifier allows for a wide range of feedstocks to be used while producing well-defined syngas compositional ranges. The use of oxygen during gasification can be varied in order to maximize the energy value of the syngas from highly variable waste while maintaining a relatively consistent syngas compositional range. For example, increasing the amount of oxygen presentduring plasma gasification (or using an oxygen-fired gasification) can produce a syngas having increased CO₂ levels and lower N₂ levels. For the purpose of this invention, the term "oxygen-fired" means that oxygen is introduced into the plasma gasifier for the purpose of aiding in efficiently converting waste into syngas and for improving the energy content of the syngas and, if desired, may used in combination with oxygen and/or air being introduced into the plasma torch or as a shroud around the plasma torch. Oxygen can be introduced into the gasifier as oxygen enriched ar or as commercial grade oxygen (e.g., at least about 90 percent purity (mass basis) oxygen). The concentration of oxygen in the gasifier ranges from about 1 to about 50 percent by mass.

An advantage of embodiments of the present disclosure is that the waste may be efficiently gasified to form a high quality syngas using a plasma gasifier.

Another advantage of embodiments of the present disclosure is the high H₂/CO ratio present in the syngas composition.

Still another advantage of embodiments of the present disclosure is that the waste may be controllably and efficiently gasified in the presence of oxygen.

Still another advantage of embodiments of the present disclosure includes shredding of waste without sorting prior to gasification, which reduces or eliminates the need to pre-sort or process waste prior to gasification, which may decrease the cost and energy requirements for the system.

Still another advantage of embodiments of the present disclosure includes the use of a plasma gasifier that does not require drying, pyrolysis, gasification and combustion zones within gasifier, each zone requiring dfferent temperatures, providing for greater simplification of controls and equipment.

The various aspects, embodiments, features and advantages can be employed alone or in combination with each other. Other features and advantages of the present invention will be apparent from the following more detailed description of the preferred embodiment, taken in conjunction with the accompanying drawings which illustrate, by way of example, the principles of the invention.

### BRIEF DESCRIPTION OF SEVERAL VIEWS OF THE DRAWINGS

FIG. 1 shows an exemplary gasification system suitable to perform the method according to an embodiment of the disclosure.
FIG. 2 shows an exemplary gas treatment system suitable to perform the method according to an embodiment of the disclosure.

### DETAILED DESCRIPTION OF THE INVENTION

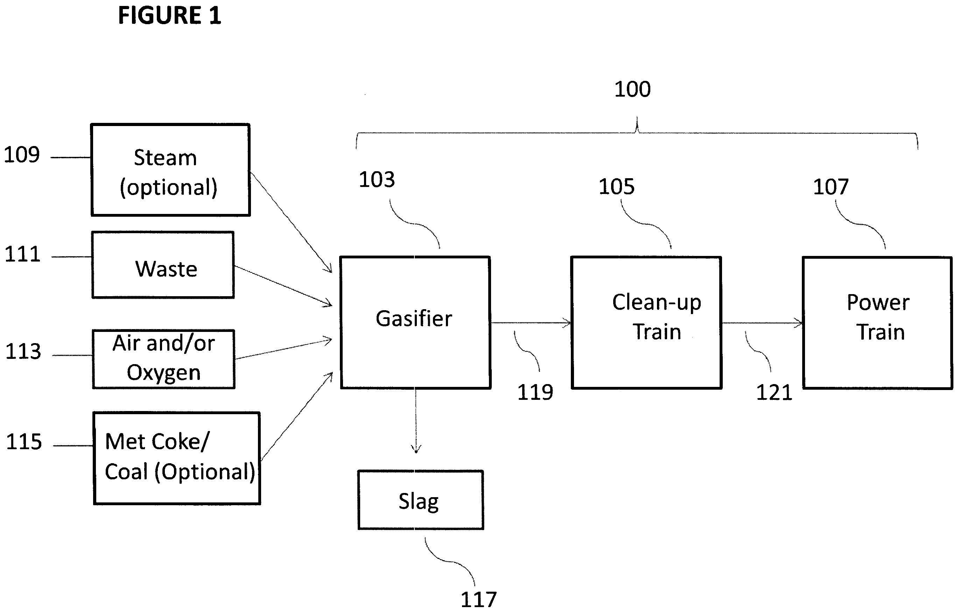

FIG. 1 shows a treatment system 100 inlcuding a series of systems for gasification of waste, removal of impurities, and power generation. The system includes a gasifier 103, a gas treatment system 105, and a power generation system 107.

As shown in FIG. 1, the gasifier 103 is a plasma gasifier which receives and processes waste feed 111. Conditions for the plasma gasification of waste involve high temperatures, a reaction vessel slightly above, at, or slightly below atmospheric pressure, and an oxidizer feed 113, such as air and/or oxygen. When waste is utilized as a feed stream, the waste may or may not be pre-sorted prior to gasification to remove recyclable materials such as glass, plastic, and metals, and may be co-fired with high carbon-containing feedstocks 115, such as coal/ metallurgical coke/ petroleum coke, if desired. Types of waste that may be amenable to a gas treatment process are MSW, commercial waste, industrial waste, construction and demolition waste, solid recovered fuel (SRF), refuse derived fuel (RDF), sewage sludge, hazardous waste, automobile shredder residue, tires, or combinations thereof. In one embodiment, the waste stream that is applicable to this invention may contain up to about 40-100 wt% MSW and commercial waste or up to about 40-100% MSW and/or RDF and/or commercial waste, with the remainder of the waste including industrial waste, construction and demolition waste, and may include hazardous waste. Less than about 15 wt% industrial waste, less than about 30 wt% construction and demolition (C&D) waste and less than about 15% hazardous waste may be present.

The composition of the waste fed into the plasma gasifier affects the composition of the product syngas stream produced. One of the primary types of waste evaluated here is municipal solid waste. Variations in MSW composition significantly alters the composition of the syngas stream produced. The ultimate (i.e. chemical) analysis of various MSW sources was determined and has been reported for various locations. Characterization reports describing the MSW from New York City, overall US and overall UK suggest MSW compositions such as those shown in Table 2.

**Table 2: Composition of MSW in NYC, US and UK**

| Component | Weight % in MSW | | |
|---|---|---|---|
| | New York City | USA | UK |
| Paper and card | 31.3 | 35.7 | 33.2 |
| Plastic | 8.9 | 11.1 | 11.2 |
| Textile | 4.7 | 4.3 | 2.1 |
| Glass and metals | 9.8 | 13.4 | 16.6 |
| Kitchen waste | 15 | 11.4 | 20.2 |
| Other Biomass | 16 | 15.9 | 16.7 |
| Miscellaneous | 14.3 | 8.2 | - |

The MSW used in the method according to the invention comprises 10-35 wt% paper and card, 5-15 wt% plastic, 2-7 wt% textiles, 2-17 wt% glass and metals, 15-30 wt% kitchen waste, 15-25 wt% biomass (includes yard waste, cut grass, wood chips) and 0-20 wt% miscellaneous other materials such as batteries, household sweepings, tires, rubber and leather (Table 3). Ash accounts for roughly 10-25 wt% of MSW, based on this composition.

**Table 3: Composition of MSW**

| Component | Weight % in MSW |
|---|---|
| Paper and card | 10-35% |
| Plastic | 5-15% |
| Textile | 2-7% |
| Glass and metals | 2-17% |
| Kitchen waste | 15-30% |
| Other Biomass | 15-25% |
| Miscellaneous | 0-20% |

The composition of C&D wastes normally includes but is not limited to dirt, stones, bricks, blocks, gypsum wallboard, concrete, steel, glass, plaster, lumber, shingles, plumbing, asphalt roofing, heating, and electrical parts. Yet these materials frequently vary constantly due to the changing nature of construction materials over time. C&D waste may contain about 5 to 30 wt% MSW. Overall, C&D waste is composed mainly of wood products, asphalt, drywall, and masonry; other components often present in significant quantities include metals, plastics, earth, shingles, insulation, and paper and cardboard.

This invention is based on C&D waste that comprises 10-50 wt% wood, 10-60 wt% concrete, 10-30 wt% masonry (bricks, stone, tiles), 5-10 wt% plastic, 5-15 wt% metals, 5-15 wt% paper and card and 0-20 wt% miscellaneous materials such as yard waste (Table 5).

**Table 5: Composition of C&D Waste**

| Component | Weight % |
|---|---|
| Wood | 10-50% |
| Concrete | 10-60% |
| Masonry | 10-30% |
| Plastic | 5-10% |
| Metals | 5-15% |
| Paper and card | 5-15% |
| Miscellaneous | 0-20% |

Commercial waste is similar in composition to MSW and comprises paper and card, plastics, textiles, glass, organic waste, metals and other materials. [12] This invention is based on commercial waste that comprises 20-70 wt% paper and card, 5-30 we% plastic, 0-5 wt% textiles, 2-15 wt% glass, and metals, 5-15 wt% organic waste (food, garden), and 0-20wt% miscellaneous materials such as batteries and sweepings (Table 6).

**Table 6: Composition of Commercial Waste**

| Component | Weight % |
|---|---|
| Paper and card | 20-70% |
| Plastic | 5-30% |
| Textile | 0-5% |
| Glass and metals | 2-15% |
| Organic waste | 5-15% |
| Other Biomass | 15-25% |
| Miscellaneous | 0-20% |

The plasma gasification process produces a slag stream 117 with molten metals/inorganics from one portion of the plasma gasifier and a product syngas stream 119 from another portion of the plasma gasifier. By "product syngas stream", it is meant that the syngas stream is the effluent of a waste gasification process, such as plasma gasification, and may comprise CO, H₂, H₂O, CO₂, N₂, O₂, CH₄, H₂S, COS, NH₃, HCl, Ar, Hg, CₓH_{y}, and heavier hydrocarbons (tars), particulates comprising char, ash, and/or unconverted fuel.

To provide a support bed for waste and to enable the flow of slag and transport of gas, optional high carbon-containing feedstocks 115, such as coke or coal feeds may be provided. Steam 109 may also be added to aid in the transport of gas or the flow of slag or for temperature moderation.

The syngas exits the plasma gasifier at high temperature and is first cooled in the gasifier or in an elbow duct directly connected to the gasifier. Cooling in the freeboard region of the gasifier may optionally be considered as part of the cooling in the gasifier. The syngas is then cooled further by performing a quench step along with particulate and other impurity removal. As it comes out of the gasifier, the cooled stream contains several gas-phase components in addition to CO and H₂ including NH₃, HCl, CO₂, N₂, Ar, COS, H₂S, inerts, water vapor and hydrocarbons. Other impurities present in the gas stream include metallic impurities such as mercury and a large amount of particulate matter. This invention identifies the composition of the gas stream at the exit of the plasma gasifier. The unique properties of this stream are important in identifying an appropriate clean-up train required to purify this stream so that the syngas may be utilized for power generation using a gas turbine, reciprocating engine, or internal combustion engine. Some unique features of the product syngas stream are the high particulate content and high concentrations of ammonia and HCl. HCl and ammonia are present in comparable concentrations and thereby allow for unique clean-up technology such as co-scrubbing. The H₂S and COS compositions also provide a distinctiveness to the gas stream.

As shown in FIG. 1, the product syngas stream 119 is fed to a gas treatment system 105, wherein impurities, such as particulates, tars, HCl, NH₃, water, mercury, H₂S, COS, inerts, hydrocarbons and other impurities are removed from syngas to form a clean syngas stream 121. By "clean syngas stream" it is meant that the syngas is sufficiently free of impurities for use in combustion for power generation, fuel or chemical manufacture, hydrogen production and/or for applications that utilize CO and/or H₂. In particular, the particulate content of the clean syngas stream 121 is between 1 and 3 mg/Nm³ if fed to a gas turbine for power generation.

The clean syngas stream 121 may be a clean syngas stream for power production, which is fed to a power generation system 107 wherein the syngas is combusted or otherwise utilized to generate power. In one embodiment of the invention, the product syngas stream is fed into a clean-up system and power generation system that are designed to maximize the production of power from gasified waste. In other embodiments, the power generation system 107 may be replaced with a chemical or liquid fuel manufacturing process such as the Fischer-Tropsch process, a hydrogen separation unit or series of units to produce clean hydrogen, or other unit or device that utilizes syngas for chemical synthesis or other process that utilizes CO and/or H₂.

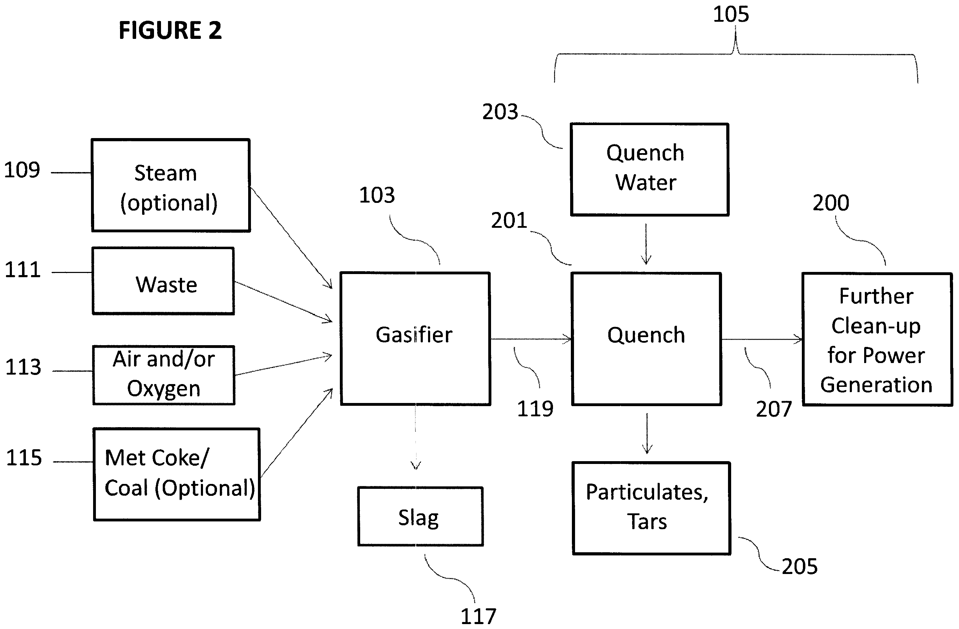

FIG. 2 shows a schematic view of the gas treatment system 105 for removing impurities from product syngas stream 119. The particulate-laden product syngas stream 119 from the plasma gasifier 103 is cooled in a quench sub-system 201 which is part of the syngas treatment or clean-up system, 105.

An exemplary but not limiting arrangement of plasma gasifier for use with the present disclosure includes a vessel of a vertical configuration, having a bottom section, a top section, and a roof over the top section. In certain embodiments, the bottom section, which may be cylindrical, contains a carbonaceous bed into which one ormore plasma torches inject a plasma gas to create an operating temperature of at least about 600°C (for example up to about 2000°C). Although the plasma torches themselves can reach temperatures of about 2000 to about 3000°C or higher, the temperature that the waste or feedstocks are subjected to are in the range of from about 800 to about 1500°C range and temperature of the syngas exiting the gasifier can range in temperature of about 800 to about 1200°C. The top section extends upward from the bottom section as a conical wall, substantially continuously without any large cylindrical or other configured portions, to the roof of the vessel, the conical wall being inversely oriented, i.e., its narrowest cross-section diameter being at the bottom where it is joined with the bottom section, and is sometimes referred to herein as having the form of a truncated inverse cone. United States Patent Application Publication 2010/0199557A1 discloses a plasma gasification reactor, and is hereby incorporated by reference.

One desirable aspect of the invention is that the higher temperatures employed for gasification enable a higher percentage of syngas to be produced per unit waste with less tars and other hydrocarbons by-products thereby permitting more efficient power production with the resulting syngas. For example, the inventive syngas can contain less than about 14% tar and other hydrocarbons.

Another exemplary, but not limiting, arrangement of plasma gasifier for use with the present disclosure includes a bottom section with a coke bed in which plasma torches and a mix of oxygen/air/steam tuyeres are directed at the coke bed. Above the bottom section is a lower feed bed section in which oxygen/air/steam tuyeres are located at least one level above the coke bed and where flows are directed at the bed of waste material that rests on the coke bed. The lower feed bed section includes side feed ports. Above the lower feed bed section is a freeboard section which provides residence time for hot gas. Above the freeboard section within the gasifier is an optional partial cooling section which cools the gas via a water only spray, via steam injection, or via a combination of the two. An optional recycle of syngas or other fluid may also be used to cool the syngas within the gasifier. Above the partial cooling section in the gasifier is an elbow duct

The syngas formed by the gasifier has a unique composition of the syngas stream produced by the plasma gasification of waste, especially municipal solid waste (MSW). The syngas exits the plasma gasifier at high temperatures such as 800 -1200 °C (∼1500-2200 °F), and may optionally be cooled at the exit of the gasifier to about 1000°C, 900[DEG.]C or even 800[DEG.]C, and is then cooled to much lower temperatures by performing a quench. Optionally, a radiant cooler may be used for waste heat recovery.

The product syngas stream from a plasma gasifier processing waste and operating in the air-fired or oxygen-fired modes, has a temperature of up to about 815-1204 [DEG.]C, (1500-2200 [DEG.]F) and can contain up to about 50,000 mg/Nm³ or from about 30,500 to 50,000 mg/Nm³ or from 5,000 to 29,500 mg/Nm³ particulates. In addition, the particle size distribution of the particulate matter present in the syngas stream from the gasifier includes at least 15 wt%, or at least 30 wt%, or at least 50 wt% of the particulate having an aerodynamic particle diameter less than or equal to 1 micron. In one embodiment, the plasma gasifier processes a waste stream that comprises of 40-100 wt% MSW and commercial waste, less than about 15 wt% industrial waste, less than about 30 wt% construction and demolition (C&D) waste and less than about 15 wt% hazardous waste and is operated in the air-fired.

The product syngas stream comprises 15-50 vol% moisture. On a dry basis, the gas also comprises 5-39 vol% H₂, 5-39 vol% CO, 15-50 vol% CO₂, 8-30 vol% N₂ (due to air ingress) and 0-2 vol% Argon. The H₂/CO ratio is about 0.3 - 2 as shown in Table 7. The post-quench syngas stream is saturated in water.

In another embodiment of the oxygen-fired mode, the product syngas stream comprises 15-30 vol% moisture. On a dry basis, the gas also comprises 10-35 vol% H₂, 15-39 vol% CO, 15-40 vol% CO₂, 8-15 vol% N₂ (due to air ingress) and 0-2 vol% Argon. The H₂/CO ratio is about 0.6 - 1.5 as shown in Table 7. The post-quench syngas stream is saturated in water.

The product syngas stream also includes small amounts of methane and other gaseous hydrocarbons. On a dry basis, 0-10 vol% CH₄ and 0-4 vol% saturated or unsaturated hydrocarbons other than CH₄ may be found. Any hydrocarbons in the solid phase are likely removed in the quench step.

The crude syngas stream contains between about 1000 and about 3000 ppm or between about 1000 and 5000 ppm HCl and between about 1000 and about 3000 ppm or between about 1000 and 5000 ppm NH₃, quantities which are higher than typically observed in syngas.

Mercury is present in trace quantities in the product syngas stream as well as the quenched syngas stream. Up to about 250 ppm mercury may be present in the streams. Sulfur is present primarily in the form of H₂S and COS in the syngas stream. Typically about 500-2000 ppm of sulfur is expected in the product syngas stream. 1-20% of the sulfur is present in the form of COS while the balance is present as H₂S.

**Table 7: Crude Syngas Compositions from the Gasification of Waste**

| | *vol% dry gas, Air fired* | *vol% dry gas, Air fired* | *vo*/*% dry gas, Oxygen-fired* | *vol% dry gas, Oxygen-fired* |
|---|---|---|---|---|
| *H2 (vlv %)* | 5-39 | 10-30 | 5-39 | 10-35 |
| CO *(v*/*v%)* | 5-39 | 10-39 | 5-39 | 15-39 |
| *CO2 (v*/*v%)* | 15-50 | 15-35 | 15-50 | 15-40 |
| *N2 (v*/*v%)* | 10-60 | 10-30 | 8-30 | 8-15 |
| *CH4 (v*/*v%)* | 0-10 | 0-10 | 0-10 | 0-10 |
| *CxHy(vlv%)* | 0-4 | 0-4 | 0-4 | 0-4 |
| *H2S (ppm)* | 400-2000 | 400-2000 | 400-2000 | 400-2000 |
| *COS (ppm)* | 5-400 | 5-400 | 5-400 | 5-400 |
| *HCl (ppm)* | 1000-5000 | 1000-5000 | 1000-5000 | 1000-5000 |
| *NH3 (ppm)* | 1000-5000 | 1000-5000 | 1000-5000 | 1000-5000 |
| *Ar (vlv%)* | 0-2 | 0-2 | 0-2 | 0-2 |
| *H2*/*CO* | 0.3-2 | 0.6-1.5 | 0.3-2 | 0.6-1.5 |
| *H2O (v*/*v%) in wet gas* | 15-50 | 15-30 | 15-50 | 15-30 |
| *Particulate matter (mg*/*Nm3)* | Up to 50,000 | From 5,000 to 29,500 or from 30,500 to 50,000 | Up to 50,000 | From 5,000 to 29,500 or from 30,500 to 50,000 |

As shown in FIG. 2, a wet quench is done by contacting the product syngas stream 119 with the quench liquid stream 203, which may include water, but other solvents can also be used. Quench liquid stream 203 can include water at ambient temperature and atmospheric pressure. This process can be carried out in any appropriate scrubbing equipment and depending upon the quantity of quench liquid stream 203 input, can significantly reduce the gas temperature. For example, a product syngas stream 119 entering the quench sub-system 201 may be at a temperature of 1500 to 2000 °F (816 to 1093 °C). The quenched syngas stream 207 may be at a temperature of less than about 212 °F (100 °C) or from about 150 °F (66 °C) to about 200 °F (93 °C) or from about 170 °F (77 °C) to about 200 °F (93 °C). A portion of the particulates, tars or unsaturated hydrocarbons, if present in the gas stream, also are removed in a solid/liquid state in the quench effluent stream 205. The quench effluent stream 205 may be recycled to the quench liquid stream 203 and/or may be flushed with an excess of water and disposed.

Syngas exits the quench step at a temperature depending on the quench methodology and operating conditions. The output temperature can be between 100 °F (38 °C) and 212 °F (100 °C).

In one embodiment of the present disclosure, the wet quench is performed with a high volume of water, such as from 200 to 300 m³/h, to allow rapid cooling.

Dioxin and furan formation may occur when process temperatures are in the range of from about 250 °C (482 °F) to about 350 °C (662 °F) in the presence of oxygen, when carbon is in the particulates, and when all of these are present at adequate residence time to provide the conditions sufficient to produce dioxin and/or furan. Wet quenching may be performed under controlled temperatures, such as temperatures below 250 °C (482 °F), at residence times and controlled oxygen content to prevent dioxin/furan formation.

In another embodiment of the present disclosure, dry quenching replaces or supplements the wet quenching process. Dry quenching may be performed by evaporative cooling of water at controlled temperatures. In another embodiment of the present disclosure, quenched syngas stream 207 can be recycled to exchange heat with the product syngas stream 119 to reduce the gas temperature of the syngas stream 119.

Standard conditions for the plasma gasification of waste involve high temperature, a pressure slightly above, at, or slightly below atmospheric pressure, and air and/or oxygen input to the gasifier. The waste may or may not be pre-sorted prior to gasification to remove recyclable materials such as glass, plastic, and metals, and may be co-fired with high carbon-containing feedstocks such coal/ metallurgical coke/ petroleum coke, if needed. As shown in Fig. 1, the process produces a slag stream with molten metals/inorganics at the bottom of the plasma gasifier and a hot syngas stream from the top of the plasma gasifier. The plasma gasifier may be operated in the presence oxygen or air or a combination thereof.

The hot, particle-laden gas from the plasma gasifier is first cooled in a preliminary cooling step which may occur either in the gasifier or in an elbow duct directly connected to the gasifier. The crude, slightly cooled syngas is further cooled in a quench step. As shown in Fig. 2, a wet quench is done by contacting the product syngas stream with the quench liquid stream, which may include water, but other solvents can also be used. The quench liquid stream can include water at ambient temperature and atmospheric pressure. This process can be carried out in any appropriate scrubbing equipment and depending upon the quantity of quench liquid stream input, can significantly reduce the gas temperature. For example, a product syngas stream entering the quench sub-system may be at a temperature of 1500 to 2000 °F (816 to 1093 °C). The post-quenched syngas stream 207 may be at a temperature of less than about 212 °F (100 °C) or from about 150 °F (66 °C) to about 200 °F (93 °C) or from about 170 °F (77 °C) to about 200 °F (93 °C). A portion of the particulates, tars or unsaturated hydrocarbons, if present in the gas stream, also are removed in a solid/liquid state in the quench effluent stream 205. The quench effluent stream 205 may be recycled to the quench liquid stream and/or may be flushed with an excess of water and disposed.

In another embodiment of the invention, dry quenching replaces or supplements the wet quenching process. Dry quenching may be performed by evaporative cooling of water at controlled temperatures. In another embodiment of the invention, cooler downstream syngas can be recycled to exchange heat with the hot syngas to significantly reduce the syngas temperature. In a further embodiment, steam maybe added to the hot syngas to reduce the syngas temperature.

As shown in FIG. 2, the post-quenched syngas stream 207 is provided to secondary clean-up train 200, which further processes the post-quenched syngas stream 207. Secondary clean-up train 200 may, for example, process the post-quenched syngas stream 207 for use in power generation (see e.g., Fig. 1).

The composition of the syngas was obtained using the results from an in-line Mass Spectrometer and these results were verified by taking bomb samples of the syngas after it exited the gasifier and analyzing them using Gas Chromatography.

Particulate analyses were carried out per modified EPA Method 5 for Particulate Loading and via CARB 501 for the Particle Size Distribution (PSD).

*Particle Loading- Filterable Particulate Matter (FPM) - EPA Method 5 (modified)* Sampling using USEPA Method 5 procedures was modified to collect filterable particulate matter (FPM) emissions at the approximate syngas temperature, rather than at EPA Method 5 specified 248 ±25°F. All samples were analyzed according to analytical procedure in EPA Method 5B; the filters were baked at 160°C.

*Particle Size Distribution (PSD) - CARB 501* Particulate matter was withdrawn isokinetically from the source and segregated by size in an in-situ cascade impactor at the sampling point exhaust conditions of temperature, pressure, etc. The resulting index of the measured particle size is traditionally separated by the particle diameter collected with 50% collection efficiency by each jet stage, and this diameter is usually called the "cut diameter" and is characterized by the symbol "D50." The aerodynamic cut diameter is the diameter of an equivalent unit density sphere which would be collected with 50% efficiency by the specific impactor jet stage. The mass of each size fraction is determined gravimetrically. Particle size determination testing varies from standard mass testing in that too much material can be collected, voiding the sample, as well as too little material, so there is no set test length. A target minimum total sample catch of 10 milligrams was used, based on the Method 5 (Modified) data. The typical sample rate for particle sizing is 0.3 to 0.5 cubic feet per minute (cfm).

### Example 1

A waste comprising refuse derived fuel was fired in a plasma gasifier in oxygen-fired mode in the presence of metallurgical coke and produces a product syngas stream containing 32,000 mg/Nm³ of particulates, 65 wt% of the particles were less than 1 micron in size, at a temperature of 1800 °F (982 °C) and a pressure of 0 psig. The concentrations on a dry basis of H₂, CO, CO₂, and N₂ are 28 v/v%, 26 v/v%, 29 v/v%, and 16 v/v%, respectively with a moisture content of 20 v/v%. The concentrations of NH₃ and HCl are 1800 ppm and 1800 ppm respectively. The crude syngas stream contains 1500 ppm H₂S and 170 ppm COS.

### Example 2

A waste comprising refuse derived fuel was fired in a plasma gasifier in oxygen-fired mode in the presence of metallurgical coke and produces a product syngas stream containing 28,000 mg/Nm³ of particulates, 35 wt% of the particles were less than 1 micron in size, at a temperature of 1800 °F (982 °C) and a pressure of 0 psig. The concentrations on a dry basis of H₂, CO, CO₂, and N₂ are 17 v/v%, 17 v/v%, 38 v/v%, and 28 v/v%, respectively with a moisture content of 22 v/v%. The concentrations of NH₃ and HCl are 1800 ppm and 1800 ppm respectively. The crude syngas stream contains 1500 ppm H₂S and 170 ppm COS.

## Claims

1. A method for forming a syngas stream comprising:
providing a waste;
plasma gasifying the waste under oxygen-fired conditions in a plasma gasifier to form a syngas stream comprising on a dry basis:
up to 50,000 mg/Nm³ particulates;
5-39 vol% H₂;
5-39 vol% CO;
15-50 vol% CO₂;
8-30 vol% N₂;
0-2 vol% Argon;
and 15-50 vol% moisture on a wet basis; and
wherein the H₂/CO ratio is 0.3-2 and at least 15 wt% of the particulates have an aerodynamic particle diameter of less than or equal to 1 micron,
wherein the waste comprises municipal solid waste (MSW), commercial waste, construction and demolition waste and combinations thereof,
wherein the MSW comprises 10-35 wt% paper and card, 5-15 wt% plastic, 2-7 wt% textiles, 2-17 wt% glass and metals, 15-30 wt% kitchen waste, 15-25 wt% biomass and 0-20 wt% other waste material,
wherein the commercial waste comprises 20-70 wt% paper and card, 5-30 wt% plastic, 0-5 wt% textiles, 2-15 wt% glass and metals, 5-15 wt% organic waste, 15-25 wt% other biomass and 0-20wt% miscellaneous materials, and
wherein the construction and demolition waste comprises 10-50 wt% wood, 10-60 wt% concrete, 10-30 wt% masonry, 5-10 wt% plastic, 5-15 wt% metals, 5-15 wt% paper and card and 0-20 wt% miscellaneous materials,
wherein the temperature in the plasma gasifier that the waste is subjected to ranges from 800 °C to 1500 °C, and
wherein the concentration of oxygen in the plasma gasifier ranges from 1 to 50 percent by mass.

2. The method of claim 1, wherein the syngas stream comprises 10-35 vol% H₂.

3. The method of claim 2, wherein the syngas stream comprises 15-39 vol% CO.

4. The method of claim 3, wherein the syngas stream comprises 15-40 vol% CO₂.

5. The method of claim 4, wherein the syngas stream comprises 8-15 vol% N₂.

6. The method of claim 5, wherein the syngas stream comprises 5,000 to 29,500 g/Nm³ or 30,500 to 50,000 g/Nm³ particulates.

7. The method of claim 1, further comprising 1000-5000 ppm HCl.

8. The method of claim 1, further comprising 1000-5000 ppm NH₃.

9. The method of claim 1, wherein at least 30 wt% of the particulates have an aerodynamic particle diameter of less than or equal to 1 micron.

10. The method of claim 1, wherein at least 50 wt% of the particulates have an aerodynamic particle diameter of less than or equal to 1 micron.

## Patentansprüche

1. Verfahren zum Bilden von einem Syngasstrom, umfassend:
Bereitstellen von einem Abfall;
Plasmavergasung von dem Abfall unter sauerstoffbefeuerten Bedingungen in einem Plasmavergaser, um einen Syngasstrom zu bilden, der bezüglich eines trockenen Bezugszustands das Folgende umfasst:
bis zu 50.000 mg/Nm³ Partikel;
5 - 39 Vol.-% H₂;
5 - 39 Vol.-% CO;
15 - 50 Vol.-% CO₂;
8 - 30 Vol.-% N₂;
0 - 2 Vol.-% Argon;
und 15-50 Vol.-% Feuchtigkeit bezüglich eines feuchten Bezugszustands; und
wobei das H₂/CO-Verhältnis 0,3 - 2 beträgt und mindestens 15 Gew.-% der Partikel einen aerodynamischen Partikeldurchmesser von weniger als oder gleich 1 Mikrometer aufweisen,
wobei der Abfall festen Siedlungsabfall (MSW, für Englisch ,municipal solid waste'), gewerblichen Abfall, Bau- und Abbruchabfall und Kombinationen davon umfasst,
wobei der MSW 10 - 35 Gew.-% Papier und Karton, 5 - 15 Gew.-% Plastik, 2 - 7 Gew.-% Textilien, 2 - 17 Gew.-% Glas und Metalle, 15 - 30 Gew.-% Küchenabfall, 15 - 25 Gew.-% Biomasse und 0 - 20 Gew.-% anderes Abfallmaterial umfasst,
wobei der gewerbliche Abfall 20 - 70 Gew.-% Papier und Karton, 5 - 30 Gew.-% Plastik, 0 - 5 Gew.-% Textilien, 2 - 15 Gew.-% Glas und Metalle, 5 - 15 Gew.-% organischen Abfall, 15 - 25 Gew.-% andere Biomasse und 0 - 20 Gew.-% sonstige Materialien umfasst, und
wobei der Bau- und Abbruchabfall 10 - 50 Gew.-% Holz, 10 - 60 Gew.-% Beton, 10 - 30 Gew.-% Mauerwerk, 5 - 10 Gew.-% Plastik, 5 - 15 Gew.-% Metalle, 5 - 15 Gew.-% Papier und Karton und 0 - 20 Gew.-% sonstige Materialien umfasst,
wobei die Temperatur in dem Plasmavergaser, dem der Abfall zugeführt wird, von 800 °C bis 1500 °C reicht, und
wobei die Konzentration an Sauerstoff in dem Plasmavergaser 1 bis 50 Massenprozent beträgt.

2. Verfahren nach Anspruch 1, wobei der Syngasstrom 10 - 35 Vol.-% H₂ umfasst.

3. Verfahren nach Anspruch 2, wobei der Syngasstrom 15 - 39 Vol.-% CO umfasst.

4. Verfahren nach Anspruch 3, wobei der Syngasstrom 15 - 40 Vol.-% CO₂ umfasst.

5. Verfahren nach Anspruch 4, wobei der Syngasstrom 8 - 15 Vol.-% N₂ umfasst.

6. Verfahren nach Anspruch 5, wobei der Syngasstrom 5000 bis 29.500 g/Nm³ oder 30.500 bis 50.000 g/Nm₃ Partikel umfasst.

7. Verfahren nach Anspruch 1, ferner umfassend 1000 - 5000 ppm HCl.

8. Verfahren nach Anspruch 1, ferner umfassend 1000 - 5000 ppm NH₃.

9. Verfahren nach Anspruch 1, wobei mindestens 30 Gew.-% der Partikel einen aerodynamischen Partikeldurchmesser von weniger als oder gleich 1 Mikrometer aufweisen.

10. Verfahren nach Anspruch 1, wobei mindestens 50 Gew.-% der Partikel einen aerodynamischen Partikeldurchmesser von weniger als oder gleich 1 Mikrometer aufweisen.

## Revendications

1. Procédé de formation d'un flux de gaz de synthèse comprenant :
la fourniture de déchets ;
la gazéification par plasma des déchets dans des conditions alimentées en oxygène dans un gazogène à plasma pour former un flux de gaz de synthèse comprenant sur une base sèche :
jusqu'à 50 000 mg/Nm³ de particules ;
5 à 39 % en volume de H₂ ;
5 à 39 % en volume de CO ;
15 à 50 % en volume de CO₂ ;
8 à 30 % en volume de N₂ ;
0 à 2 % en volume d'argon ;
et 15 à 50 % en volume d'humidité sur une base humide ; et
dans lequel le rapport H₂/CO est de 0,3 à 2 et au moins 15 % en poids des particules ont un diamètre de particule aérodynamique inférieur ou égal à 1 micron,
dans lequel les déchets comprennent des déchets ménagers solides, des déchets commerciaux, des déchets de construction et de démolition et des combinaisons de ceux-ci,
dans lequel les déchets ménagers solides comprennent 10 à 35 % en poids de papier et de carton, 5 à 15 % en poids de plastique, 2 à 7 % en poids de textiles, 2 à 17 % en poids de verre et de métaux, 15 à 30 % en poids de déchets de cuisine, 15 à 25 % en poids de biomasse et 0 à 20 % en poids d'autres matériaux de déchets,
dans lequel les déchets commerciaux comprennent 20 à 70 % en poids de papier et de carton, 5 à 30 % en poids de plastique, 0 à 5 % en poids de textiles, 2 à 15 % en poids de verre et de métaux, 5 à 15 % en poids de déchets organiques, 15 à 25 % en poids d'autre biomasse et 0 à 20 % en poids de matériaux divers, et
dans lequel les déchets de construction et de démolition comprennent 10 à 50 % en poids de bois, 10 à 60 % en poids de béton, 10 à 30 % en poids de maçonnerie, 5 à 10 % en poids de plastique, 5 à 15 % en poids de métaux, 5 à 15 % en poids de papier et de carton et 0 à 20 % en poids de matériaux divers,
dans lesquels la température dans le gazogène à plasma à laquelle les déchets sont soumis est dans la plage de 800 °C à 1500 °C, et
dans lequel la concentration d'oxygène dans le gazogène à plasma est comprise entre 1 et 50 pour cent en masse.

2. Procédé de la revendication 1, dans lequel le flux de gaz de synthèse comprend de 10 à 35 % en volume de H₂.

3. Procédé de la revendication 2, dans lequel le flux de gaz de synthèse comprend de 15 à 39 % en volume de CO.

4. Procédé de la revendication 3, dans lequel le flux de gaz de synthèse comprend 15 à 40 % en volume de CO₂.

5. Procédé de la revendication 4, dans lequel le flux de gaz de synthèse comprend de 8 à 15 % en volume de N₂.

6. Procédé de la revendication 5, dans lequel le flux de gaz de synthèse comprend de 5 000 à 29 500 g/Nm³ ou de 30 500 à 50 000 g/Nm³ de particules.

7. Procédé de la revendication 1, comprenant en outre de 1000 à 5000 ppm de HCl.

8. Procédé de la revendication 1, comprenant en outre de 1000 à 5000 ppm de NH₃.

9. Procédé de la revendication 1, dans lequel au moins 30 % en poids des particules ont un diamètre de particule aérodynamique inférieur ou égal à 1 micron.

10. Procédé de la revendication 1, dans lequel au moins 50 % en poids des particules ont un diamètre de particule aérodynamique inférieur ou égal à 1 micron.
